(19) **Europäisches Patentamt / European Patent Office / Office européen des brevets**

(11) **EP 3 637 924 B1**

(12) **EUROPEAN PATENT SPECIFICATION**

(45) Date of publication and mention of the grant of the patent:
**08.11.2023 Bulletin 2023/45**

(21) Application number: **17912934.1**

(22) Date of filing: **08.06.2017**

(51) International Patent Classification (IPC):
**H04W 72/12** (2023.01)    **H04L 1/1822** (2023.01)
**H04L 1/1829** (2023.01)    **H04L 1/1867** (2023.01)
**H04L 5/00** (2006.01)    **H04W 74/08** (2009.01)

(52) Cooperative Patent Classification (CPC):
**H04W 74/08; H04L 1/1822; H04L 1/1887;**
**H04L 1/1893; H04L 5/0044;** H04L 1/1864

(86) International application number:
**PCT/JP2017/021402**

(87) International publication number:
**WO 2018/225232 (13.12.2018 Gazette 2018/50)**

(54) **TERMINAL, RADIO COMMUNICATION METHOD, BASE STATION AND SYSTEM**

ENDGERÄT, FUNKKOMMUNIKATIONSVERFAHREN, BASISSTATION UND SYSTEM

TERMINAL, PROCÉDÉ DE COMMUNICATIONS RADIO, STATION DE BASE ET SYSTÈME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.04.2020 Bulletin 2020/16**

(73) Proprietor: **NTT DOCOMO, INC.**
**Chiyoda-ku**
**Tokyo 100-6150 (JP)**

(72) Inventors:
• **TAKEDA, Kazuki**
**Tokyo 100-6150 (JP)**
• **NAGATA, Satoshi**
**Tokyo 100-6150 (JP)**
• **WANG, Lihui**
**Beijing 100190 (CN)**
• **HOU, Xiaolin**
**Beijing 100190 (CN)**

(74) Representative: **Hoffmann Eitle**
**Patent- und Rechtsanwälte PartmbB**
**Arabellastraße 30**
**81925 München (DE)**

(56) References cited:
**WO-A1-2017/039564    US-A1- 2015 181 589**

• **HUAWEI ET AL: "Grant-free resource configuration", 3GPP DRAFT; R2-1705118 GRANT-FREE RESOURCE CONFIGURATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Hangzhou, China; 20170515 - 20170519 14 May 2017 (2017-05-14), XP051275594, Retrieved from the Internet: URL:http://www.3gpp.org/ftp/Meetings_3GPP_SYNC/RAN2/Docs/ [retrieved on 2017-05-14]**
• **INSTITUTE FOR INFORMATION INDUSTRY (III): "Uplink Grant Free Transmission for URLLC", 3GPP DRAFT; R1-1709126 UPLINK GRANT FREE TRANSMISSION FOR URLLC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Hangzhou; 20170515 - 20170519 14 May 2017 (2017-05-14), XP051274283, Retrieved from the Internet: URL:http://www.3gpp.org/ftp/Meetings_3GPP_SYNC/RAN1/Docs/ [retrieved on 2017-05-14]**

EP 3 637 924 B1

- HUAWEI ET AL: "Grant-free transmission for UL URLLC", 3GPP DRAFT; R1-1706919, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Hangzhou, China; 20170515 - 20170519 14 May 2017 (2017-05-14), XP051272149, Retrieved from the Internet: URL:http://www.3gpp.org/ftp/Meetings_3GPP_SYNC/RAN1/Docs/ [retrieved on 2017-05-14]
- LENOVO: "On data transmission to support multiplexing of eMBB and URLLC", 3GPP TSG-RAN WG1#87 RI-1612097, 4 November 2016 (2016-11-04), XP051189170,
- NTT: "On eMBB and URLLC multiplexing for uplink", 3GPP TSG-RAN WG1#88 RI-1702818, 7 February 2017 (2017-02-07), XP051221645,
- NTT: "Processing time and HARQ process number for NR", 3GPP TSG-RAN WG1#89 R1-1708482, 6 May 2017 (2017-05-06), XP051262485,
- HUAWEI et al.: "Support of Multiple Numerologies", 3GPP TSG-RAN WG2#95bis R2-166201, 1 October 2016 (2016-10-01), XP051162072,
- "Scheduling request design in NR system", 3GPP TSG-RAN WG1#89 RI-1708480, 6 May 2017 (2017-05-06), XP051262483,

**Description**

Technical Field

The present invention relates to a terminal, a radio communication method for a terminal, a base station and a system.

Background Art

In the UMTS (Universal Mobile Telecommunications System) network, the specifications of long term evolution (LTE) have been standardized for the purpose of further increasing high speed data rates, providing lower latency and so on (see non-patent literature 1). In addition, LTE-A (LTE advanced and LTE Rel. 10, 11, 12 and 13) has been standardized for the purpose of achieving increased capacity and enhancement beyond LTE (LTE Rel. 8 and 9).

Successor systems of LTE are also under study (for example, referred to as "FRA (Future Radio Access)," "5G (5th generation mobile communication system)," "5G+ (plus)," "NR (New Radio)," "NX (New radio access)," "FX (Future generation radio access)," "LTE Rel. 14 or 15 and later versions," etc.).

In existing LTE systems (for example, LTE Rel. 8 to 13), downlink (DL) and/or uplink (UL) communication are carried out by using 1-ms subframes (also referred to as "transmission time intervals (TTIs)" and so on). These subframes are the time unit for transmitting 1 channel-encoded data packet, and serve as the unit of processing in, for example, scheduling, link adaptation, retransmission control (HARQ (Hybrid Automatic Repeat reQuest)) and so on.

Furthermore, a radio base station (for example, an eNB (eNode B)) controls the allocation (scheduling) of data to user terminals (UE (User Equipment)), and reports data scheduling commands to the UEs by using downlink control information (DCI). For example, when a UE conforming to existing LTE (for example, LTE Rel. 8 to 13) receives DCI that commands UL transmission (also referred to as a "UL grant"), the UE transmits UL data in a subframe that is located a predetermined period later (for example, 4 ms later).

Non-Patent Literature 2 describes grant-free resource configurations. It is proposed that grant-free resource is configured by RRC, and the configuration including at least T/F resource, period of resource, MCS etc.

Citation List

Non-Patent Literature

Non-Patent Literature 1: 3GPP TS36.300 V8.12.0 "Evolved Universal Terrestrial Radio Access (E-UTRA) and Evolved Universal Terrestrial Radio Access Network (E-UTRAN); Overall Description; Stage 2 (Release 8)," April, 2010
Non-Patent Literature 2: HUAWEI ET AL: "Grant-free resource configuration", 3GPP DRAFT; R2-1705118

Summary of Invention

Technical Problem

In future radio communication systems (for example, NR), it is likely that data scheduling will be controlled differently than in existing LTE systems. For example, in order to provide communication services that require low latency and high reliability (for example, URLLC (Ultra Reliable and Low Latency Communications)), research is underway to reduce communication latency (latency reduction).

To be more specific, in order to reduce the latency time before UL data transmission is started, studies are in progress to perform communication by permitting contention in UL transmission among multiple UEs. For example, studies are in progress to allow UEs to transmit UL data without UL grants from radio base stations (which is referred to as, for example, "UL grant-free transmission," "UL grant-less transmission," "contention-based UL transmission," etc.).

However, how to design the configuration for UL grant-free transmission to meet a variety of ranges of requirements for latency and reliability, and how UE behaves under that configuration have not been studied much. Unless these are determined properly, flexible control will not be possible, and the throughput of communication, the spectral efficiency and so on might deteriorate.

It is therefore an object of the present invention to provide a user terminal and a radio communication method, whereby, even when UL grant-free transmission is employed, the decline in communication throughput and the like can be reduced.

Solution to Problem

This object is accomplished by the subject-matter of the independent claims. The dependent claims concern particular embodiments.

Advantageous Effects of Invention

According to the present invention, even when UL grant-free transmission is employed, it is possible to reduce the decline in communication throughput and so forth.

Brief Description of Drawings

FIG. 1A is a diagram to explain UL grant-based transmission, and FIG. 1B is a diagram to explain UL grant-free transmission;
FIG. 2 is a diagram to show examples of resources for use in UL grant-free transmission;
FIG. 3 is a diagram to show examples of how GF configurations are selected, according to embodiment 2.1 of the present invention;
FIG. 4 is a diagram to show examples of how GF configurations are selected, according to embodiment 2.2 of the present invention;
FIG. 5 is a diagram to show an exemplary schematic structure of a radio communication system according to one embodiment of the present invention;
FIG. 6 is a diagram to show an exemplary overall structure of a radio base station according to one embodiment of the present invention;
FIG. 7 is a diagram to show an exemplary functional structure of a radio base station according to one embodiment of the present invention;
FIG. 8 is a diagram to show an exemplary overall structure of a user terminal according to one embodiment of the present invention;
FIG. 9 is a diagram to show an exemplary functional structure of a user terminal according to one embodiment of the present invention; and
FIG. 10 is a diagram to show an exemplary hardware structure of a radio base station and a user terminal according to one embodiment of the present invention.

Description of Embodiments

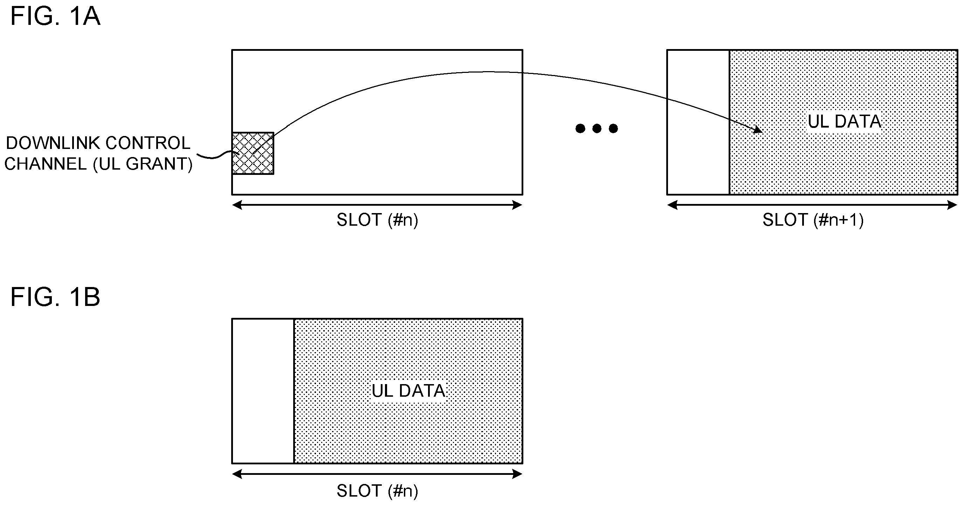

Envisaging future radio communication systems (including, for example, LTE Rel. 14, 15 and later versions, 5G, NR, etc., hereinafter collectively referred to as "NR"), UL grant-based transmission, in which UL data is transmitted based on UL grants, is not enough by itself to enable communication with low latency, and it is necessary to employ UL grant-free transmission, in which UL data is transmitted without UL grants.
Here, UL grant-based transmission and UL grant-free transmission will be explained. FIG. 1A is a diagram to explain UL grant-based transmission, and FIG. 1B is a diagram to explain UL grant-free transmission.
In UL grant-base transmission, as shown in FIG. 1A, a radio base station (which may be referred to as, for example, a "base station (BS)," a "transmission/reception point (TRP)," an "eNode B (eNB)," a "gNB," etc.) transmits a downlink control channel (UL grant) that commands allocation of UL data (PUSCH (Physical Uplink Shared CHannel)), and a UE transmits the UL data based on this UL grant.
Meanwhile, in UL grant-free transmission, as shown in FIG. 1B, a UE transmits UL data without receiving UL grants, which are provided for scheduling data.
Also, regarding UL grant-free transmission, studies are underway to repeat transmitting UL data. In repetition transmission of UL data, it is predictable that a UE repeats transmitting UL data a given number of times (for example, K times) in transport block (TB) units. For example, the UE keeps transmitting TBs in response to UL data until downlink control information (UL grant) to command retransmission of UL data is transmitted, or until the number of times transmission is repeated reaches the above given number of times.
Now, for NR, research is underway to provide support for configuring/re-configuring, at least semi-statically, resource regions for allocating UL data that is transmitted in UL-grant free transmission. Studies are underway to include at least physical, time and/or frequency domain resources in resource configuration.
For example, studies are in progress to configure resources for use in UL grant-free transmission, by higher layer signaling, as in UL semi-persistent scheduling (SPS), which is used in existing LTE (for example, LTE Rel. 8 to 13).

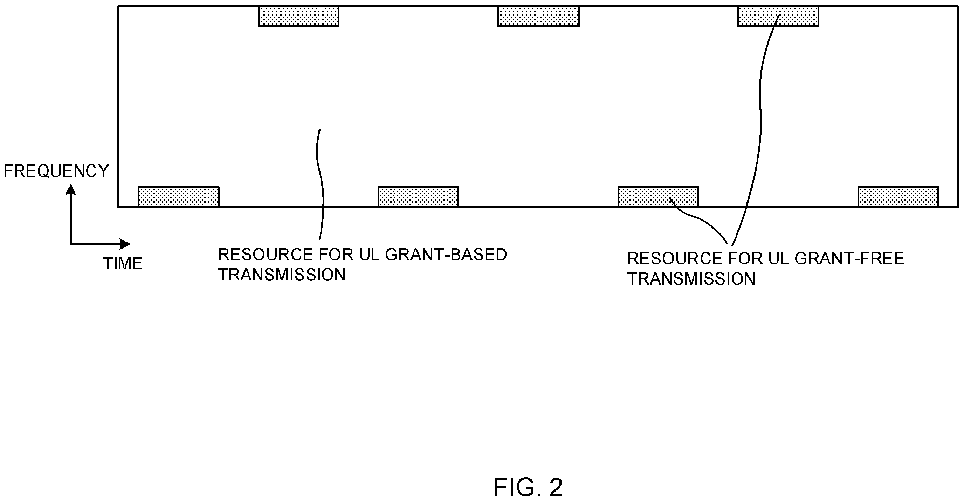

FIG. 2 is a diagram to show examples of resources for use in UL grant-free transmission. As shown in FIG. 2, inter-TTI frequency hopping, intra-TTI frequency hopping and the like may be applied to frequency resources for use in UL grant-free transmission. Also, time resources for use in UL grant-free transmission may be configured contiguously in time, or may be configured non-contiguously (intermittently) in time. Note that, resources other than those used in UL grant-free transmission may be used in UL grant-based transmission.

Note that, UL SPS in LTE (Rel-14) has been studied to skip transmission (transmission skipping) when there is no UL data to transmit (for example, the buffer for transmission is empty). Note that, even in UL grant-free transmission, if the UE has no UL data to transmit, the UE does not have to perform UL grant-free transmission (the UE may skip transmission) in resources configured for UL grant-free transmission.

Note that studies are in progress to set forth the requirements for latency and reliability in a variety of ranges, especially for URLLC services. Also, for NR, multiple numerologies can be supported in a given carrier.

A numerology may refer to a communication parameter that is applied to transmission and/or receipt of a given signal and/or channel, and may represents at least one of subcarrier spacing, the bandwidth, the length of symbols, the length of cyclic prefixes, the length of TTIs (for example, the length of singrames, the length of slots, etc.), the number of symbols per TTI, the radio frame configuration, the filtering process, the windowing process and so on.

However, how to design the configuration for UL grant-free transmission to meet a variety of ranges of requirements for latency and reliability, and how UE behaves under that configuration have not been studied much. Unless these are specified properly, flexible control will not be possible, and the throughput of communication, the spectral efficiency and so on might deteriorate.

So, the present inventors have studied the configuration of UL grant-free transmission and UE operations, and arrived at the present invention.

Now, embodiments of the present invention will be described in detail below with reference to the accompanying drawings. Note that the radio communication methods according to the herein-contained embodiments may be used individually or may be used in combination.

Note that, in the following embodiments, the prefix "NR-," attached to an arbitrary signal or channel, may be construed as meaning that the signal or the channel is designed for use in NR.

Also, a "parameter" as used herein (which may be referred to as a "radio parameter," "configuration information," etc.) might mean a "parameter set," which refers to a set of one or more parameters.

In the following description, "UL grant-free" will be also simply referred to as "ULGF," "GF," and the like.

(Radio Communication Method)

<First Embodiment>

A first embodiment of the present invention relates to a method of designing GF configurations. UE may support only 1 GF configuration in 1 carrier, or may support more than 1 GF configuration. Note that a GF configuration may be referred to as a "GF transmission configuration" and the like.

The number of GF configurations which UE can support (use) may be configured (indicated) by a gNB by using higher layer signaling (for example, radio resource control (RRC) signaling, broadcast information (the master information block (MIB), system information blocks (SIBs), etc.), medium access control (MAC) signaling, etc.), physical layer signaling (for example, DCI) or a combination of these, or may be defined in the specification.

For example, GF configurations may be configured (specified) from a gNB to UE by using higher layer signaling (for example, RRC signaling), physical layer signaling (for example, DCI) or by a combination of these, or may be defined in the specification.

Note that, GF configurations configured by given signaling (for example, higher layer signaling) may be overridden, updated, adjusted, modified and so forth, by another signaling (for example, physical layer signaling). Note that expressions such as "override" are examples, and it is obvious that they may be replaced with words synonymous with these expressions.

Which parameters the UE uses in GF transmission is determined by GF configurations. Hereinafter, although parameters that can be included in GF configurations will be listed and described below, these parameters may be used in GF transmission, or may be used in processes other than GF transmission. For example, any of the parameters that will be described below may be interpreted as "parameters for use in GF transmission."

For example, if a carrier supports multiple numerologies, it is preferable if 1 GF configuration in this carrier includes parameters related to numerologies.

Parameters related to numerologies may include information specifying numerologies (for example, numerology indices), or include communication parameters such as SCS and TTI length. For example, if a carrier supports multiple TTI lengths for a given numerology, it is preferred that 1 GF configuration in this carrier includes the parameter of TTI length.

Also, 1 GF configuration may include parameters related to the waveform. This parameter related to the waveform may include information to indicate that waveforms based on given communication schemes are supported (these communication schemes may be referred to as "multiplexing schemes," "modulation schemes," "access schemes," "waveform schemes," etc.), and may indicate, for example, which one of the cyclic prefix orthogonal frequency division multiplexing (CP-OFDM)-based waveform and the discrete fourier transform spread orthogonal frequency division multiplexing (DFT-S-OFDM)-based waveform is used.

Note that the waveform may be distinguished by whether or not DFT precoding (spreading) is applied to the OFDM waveform. For example, CP-OFDM may be referred to as the "waveform (signal) to which DFT precoding is not applied," and DFT-S-OFDM may be referred to as the "waveform (signal) to which DFT precoding is applied."

Also, 1 GF configuration may include a parameter related to codeword (CW) mapping. For example, assuming that "F" stands for mapping in which the frequency direction is prioritized (frequency-first mapping), "L" stands for mapping in which the space (layer) direction is prioritized (space (layer)-first mapping), and "T" stands for mapping in which the time direction is prioritized (time-first mapping), F→L→T, L→F→T, T→L→F, T→F→L and so forth may be possible orders of mapping codewords to resources. The parameter related to codeword mapping may include information that specifies at least one such order of mapping.

1 GF configuration may include parameters that relate to time-domain resources (which may be also referred to as "time resources"). For example, the parameters related to time domain resources may include a slot index, a starting symbol index, the transmission duration, the periodicity, a subframe index, given rules and the like. Note that the time resources for use in GF transmission may be allocated to time slots that are fixed in time, may be allocated to slots that fulfill given conditions, or may be allocated to arbitrary slots.

1 GF configuration may include parameters that relate to frequency-domain resources (which may be also referred to as "frequency resources"). For example, the parameters related to frequency domain resources may include the number of physical resource blocks (PRBs)), a starting resource block index, the number of subcarriers, a starting subcarrier index, the periodicity in the frequency direction, a frequency hopping pattern, given rules and the like.

Note that frequency resources for use for GF transmission may be represented in the same way as the designation to use the resource allocation field of UL grants. In addition, frequency resources in each symbol in the transmission duration may be designated, and or frequency resource may be designated by the hopping pattern when the number of times transmission is repeated is K (> 1).

1 GF configuration may include a parameter that indicates whether GF transmission and/or retransmission is performed on a per transport block (TB) basis or on a per code block group (CBG) basis. Here, a CB is a segment that is obtained by dividing a TB, and a CBG is a group that includes one or more CBs.

1 GF configuration may include a parameter as to whether UL transmission skipping is possible or not. Note that UL transmission skipping may be configurable, may be possible (enabled) at all times during GF transmission, or may be not possible (disabled) at all times. If UL transmission skipping is possible at all times, the amount of information required for GF configurations can be reduced.

Also, 1 GF configuration may include the number of HARQ processes (for example, the total number of HARQ processes for use for GF transmission). Also, 1 GF configuration may include an HARQ process number (HPN). In correspondence with 1 HPN, one or more resources may be allocated. Note that the number of HARQ processes that can be used in GF transmission may be specified in the specification.

Note that the UE may derive the HPN based on resources used in GF transmission (may be simply referred to as "GF resource"). The UE may derive the HPN based on the time resources for use for GF transmission, and may derive the HPN based on, for example, following equation 1:

$$HPN = \left\lfloor \frac{current\ TTI\ length}{GI\ transmission\ cycle} \right\rfloor mod\ the\ number\ of\ HARQ\ processes$$

$$\ldots (Equation\ 1)$$

Note that the current TTI length in equation1 may be the TTI length configured by the GF configuration or the TTI length specified in the specification. Also, the number of HARQ processes in equation 1 may be the number of HARQ processes that can be used in GF transmission, as mentioned earlier.

Also, the UE may derive the HPN based on frequency resources used in GF transmission, or may derive the HPN based on the frequency resource and the time resource.

1 GF configuration may include a modulation and coding scheme (MCS), a new data indicator (NDI), a redundancy version (RV) and the like.

Also, 1 GF configuration may include power control-related parameters (for example, parameters related to target received power, transmission power offset (P_0), etc.).

1 GF configuration may include parameters related to given measurements and/or reporting. For example, the parameters for given measurements and/or reporting may include a parameter and/or a trigger for aperiodic CSI (A-CSI (Aperiodic Channel State Information)) reporting, a parameter and/or a trigger for aperiodic measurement reference signal (A-SRS (Aperiodic Sounding Reference Signal)) transmission, and the like.

1 GF configuration may include a parameter for an arbitrary reference signal (which may be referred to as an "RS parameter") (for example, a demodulation reference signal (DMRS) for GF transmission).

Also, 1 GF configuration may include a parameter related to a given identifier (for example, a radio network temporary identifier (RNTI)). For example, 1 GF configuration may include an RNTI to use for GF transmission-related scrambling and/or descrambling (which may be referred to as an "UL GF-RNTI," a "GF-RNTI" and the like). The UL GF-RNTI may be used to scramble downlink signals that relate to GF configurations (for example, DCI), or may be used to scramble UL grants that are transmitted from a gNB that has received GF transmission.

1 GF configuration may include a parameter that relates to repetition of GF transmission (repetition-related parameter). For example, the repetition-related parameter may be the number of times (K) GF transmission is repeated.

If K is greater than 1, 1 GF configuration may include MCSs, RVs, RS parameters, power control-related parameters and so on, which are for use for every 1 repetition unit (a slot, for example) or for every several repetition units. That is, 1 GF configuration may include a number of MCSs, power control-related parameters and so forth. For example, when a number of parameters of the same type (for example, MCS) are included, at least one of them may be represented in an absolute value, or may be represented in the form of an adjustment value (for example, the difference) from another parameter of the same kind.

Also, the repetition-related parameter may include information that triggers (commands) given measurements and/or reporting (for example, A-CSI reporting, A-SRS transmission, etc.) in the resource used in the n-th transmission among K repeated transmissions (where n is less than or equal to K).

Also, the repetition-related parameter may include the time offset (for example, the number of slots) between neighboring repeated transmissions (for example, the first and second transmissions).

Also, the repetition-related parameter may include the frequency hopping pattern (for example, the hopping rule between neighboring repeated transmissions).

1 GF configuration may include a GF configuration index to distinguish (specify, identify, etc.) the GF configuration.

Note that the above-described parameters that can be included in GF configurations may be reported explicitly or reported implicitly (for example, they may be specified from other parameters).

According to the first embodiment described above, GF configuration are applied to UE properly, so that the UE can make GF transmissions. For example, the UE can perform GF transmissions by using different GF configurations for each numerology, which enables flexible control.

<Second Embodiment>

A second embodiment of the present invention relates to the behavior of UE in the event the UE supports more than 1 GF configuration in 1 carrier. The second embodiment is roughly divided into the case in which only 1 GF transmission process is permitted at a given timing (period) (embodiment 2.1) and the case in which more than 1 GF transmission process is permitted at a given timing (embodiment 2.2).

Although example cases will be described below in which URLLC traffic (data) is subject to GF transmission, this is by no means limiting. The following URLLC traffic may be read as arbitrary traffic.

(Embodiment 2.1)

According to embodiment 2.1, if URLLC traffic is present in UE's buffer (which may be paraphrased as URLLC data has become available, has arrived, etc.), the UE selects the GF configuration to apply (or correspond) to the earliest (closest) GF resource and uses this for GF transmission.

This process can be implemented if URLLC traffic is present in buffer, regardless of in which logical channel group (LCG) the URLLC traffic has been produced. Note that the GF configuration to apply to the earliest GF resource may be referred to as the "GF configuration to identify (or define) the earliest GF resource."

Also, if there are multiple LCGs, these LCGs may be used for different URLLC services, respectively.

The UE may transmit a buffer status report (BSR), which shows the buffer size of all LGGs' uplink data to be transmitted, along with the data, through GF transmission. If the gNB successfully decodes the data, the gNB may transmit to the UE a UL grant for transmitting URLLC traffic.

If more than 1 GF configurations collide at the same timing within 1 carrier (for example, in the same symbol) (that is, a number of GF resources that are based on separate GF configurations overlap in time), the UE may select one of the GF configurations based on a given rule and use this for GF transmission.

Information about this given rule (information about the order of priorities of GF configurations) may be configured by higher layer signaling (for example, RRC signaling), may be included in GF configurations and reported, or may be specified in the specification.

For example, if more than 1 GF configurations collide in the same symbol in 1 carrier, the UE may select a GF configuration with at least one of a shorter (or longer) periodicity, a shorter (or longer) transmission duration, a smaller (or larger) number of repetitions, a smaller (or larger) SCS, and so forth, among the multiple GF configurations. Also, among the multiple GF configurations, the UE may select a GF configuration that corresponds to a given GF configuration index (for example, a smaller GF configuration index).

Note that, the length of the periodicity, the transmission duration, and so forth may be determined simply by the number of slots, or may be determined by the actual time length taking into account, for example, the numerologies (SCS, slot length, etc.) and the number of slots.

In the event a UL grant that has been scrambled by a given identifier (for example, an RNTI that is not a UL GF-RNTI, such as a cell-RNTI (C-RNTI)) schedules a given resource and this given resource overlaps with a GF resource, the UE may decide whether to prioritize the UL transmission scheduled by this UL grant or prioritize the GF transmission using that GF resource, based on a given rule.

The priorities of these transmissions may be configured by higher layer signaling (for example, RRC signaling), may be included in the GF configuration and reported, or may be dynamically indicated by a UL grant.

Note that, in the event a UL grant that has been scrambled by a UL GF-RNTI schedules a given resource and this given resource overlaps with a GF resource, the UL transmission scheduled by this UL grant may be prioritized.

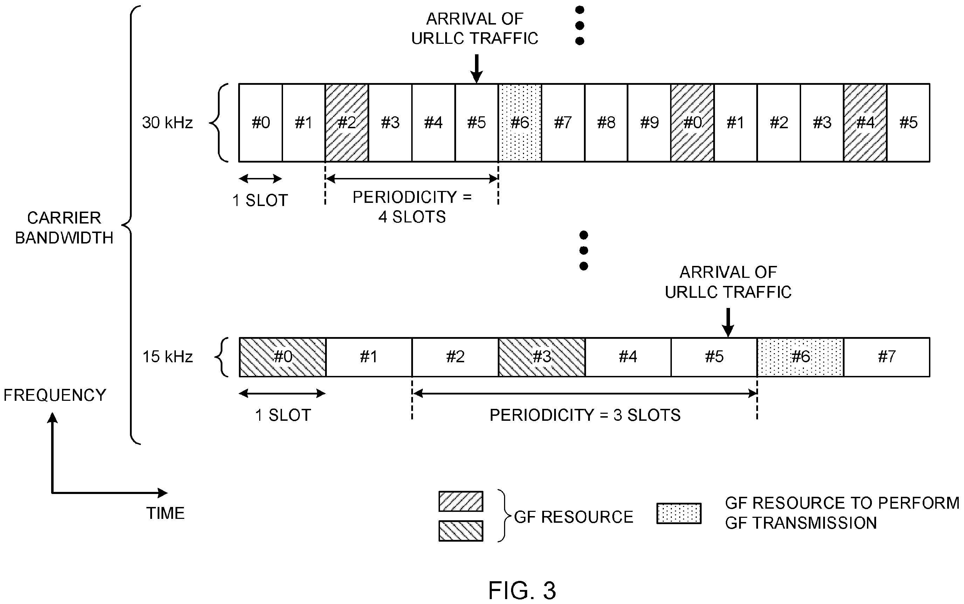

FIG. 3 is a diagram to show examples of how GF configurations are selected, based on embodiment 2.1. Here, the GF configuration, in which the numerology (SCS) is 15 kHz, the periodicity is 3 slots, and the transmission duration is 1 slot, is shown as GF configuration 1. Also, the GF configuration, in which the numerology (SCS) is 30 kHz, the periodicity is 4 slots, and the transmission duration is 1 slot, is shown as GF configuration 2.

The frequency resources for these GF configurations are located in frequency bands, not overlapping each other, within a carrier (component carrier) bandwidth. Also, the timings at which the slots in GF configuration 2 start or end meet the slot boundaries in GF configuration 1.

The example in FIG. 3 shows a case in which URLLC traffic arrives (is produced) at the timing of slot #2 in GF configuration 1 and the timing of slot #5 in GF configuration 2. The earliest GF resource after this timing is slot #3 in GF configuration 1 and slot #6 in GF configuration 2.

In this example, when a number of GF configurations collide at the same timing, the UE selects a GF configuration having a shorter transmission duration (or periodicity) among the number of GF configurations. That is, the UE selects the GF resource of GF configuration 2 having the shorter actual transmission duration (or periodicity) among the earliest GF resources, and transmits the URLLC traffic in GF transmission by using that GF resource. In this case, the UE skips the transmission of the GF resource of slot #3 in GF configuration 1.

Furthermore, this example illustrates a case in which URLLC traffic arrives at the timing of slot #5 in GF configuration 1 and the timing of slot #2 in GF configuration 2. The earliest GF resource from this timing is slot #6 in GF configuration 1, so that the UE transmits URLLC traffic in GF transmission by using that GF resource of slot #6 in GF configuration 1.

According to embodiment 2.1 described above, the UE can properly select the GF configuration to be applied to the GF transmission, even if only 1 GF transmission process is permitted.

(Embodiment 2.2)

In embodiment 2.2, different GF configurations are associated with, at least one of, different numerologies, different TTI lengths and different LCGs, and applied to UE. According to this configuration, it is possible to assign different GF configurations, for a number of different URLLC requests, respectively.

If there is URLLC traffic related with at least one of a given numerology, a given TTI length and a given LCG, the UE may select the GF configuration configured for the at least one of the given numerology, the given TTI length and the given LCG, and use this for GF transmission. In other words, the UE transmits URLLC traffic in GF transmission by using the GF configuration associated with the URLLC traffic.

However, if the latency requirement for this URLLC traffic is tight (tight latency requirement), the UE may select the GF configuration to correspond to the earliest (closest) GF resource and use this for GF transmission. On the other hand, if the latency requirement for the URLLC traffic is not tight, the UE may select the GF configuration that is configured for at least one of the given numerology, the given TTI length and the given LCG associated with the URLLC traffic, and use this for GF transmission.

The UE may transmit the BSRs for all the LCGs, in GF transmission, together with data, or transmit the BSRs related with the LGG that correspond to the selected GF configuration, in GF transmission.

If more than 1 GF configurations collide at the same timing (for example, in the same symbol) within 1 carrier, the UE may select 1 of the GF configurations based on a given rule, and use this for GF transmission.

Information about this given rule (information about the order of priorities of GF configurations) may be configured by higher layer signaling (for example, RRC signaling), may be included in GF configurations and reported, or may be specified in the specification.

For example, if more than 1 GF configurations collide in the same symbol in 1 carrier, the UE may choose a GF configuration that has (or that can fulfill) a tighter requirement for latency. The UE may select, out of a number of GF configurations, a GF configuration that corresponds to at least one of a shorter periodicity, a shorter transmission duration, a smaller number of repetitions, a larger SCS and so forth. The UE may select a GF configuration in which the number of repetitions is 1, among a number of GF configurations.

Also, among the multiple GF configurations, the UE may select a GF configuration that corresponds to a given GF configuration index (for example, a smaller GF configuration index).

In the event a UL grant that has been scrambled by a given identifier (for example, an RNTI that is not a UL GF-RNTI, such as a cell-RNTI (C-RNTI)) schedules a given resource and this given resource overlaps with a GF resource, the UE may decide whether to prioritize the UL transmission scheduled by this UL grant or prioritize the GF transmission using that GF resource, based on a given rule.

Information about the given rule (information about the order of priorities of UL grant-based transmission and GF transmission) may be configured by higher layer signaling (for example, RRC signaling), included in a GF configuration and reported, or may be indicated dynamically by a UL grant.

For example, the UE may judge that UL transmission scheduled by UL grants always has high priority, or judge that GF transmission to use GF resources always has high priority. Also, in the event there is a GF configuration that has (or that can fulfill) a tighter requirement for latency, the UE may judge the priority of this GF configuration high, or, otherwise, the UE may judge the priority of UL transmission scheduled by UL grants high.

Note that, in the event a UL grant that has been scrambled by a UL GF-RNTI schedules a given resource and this given resource overlaps with a GF resource, the UL transmission scheduled by this UL grant may be prioritized.

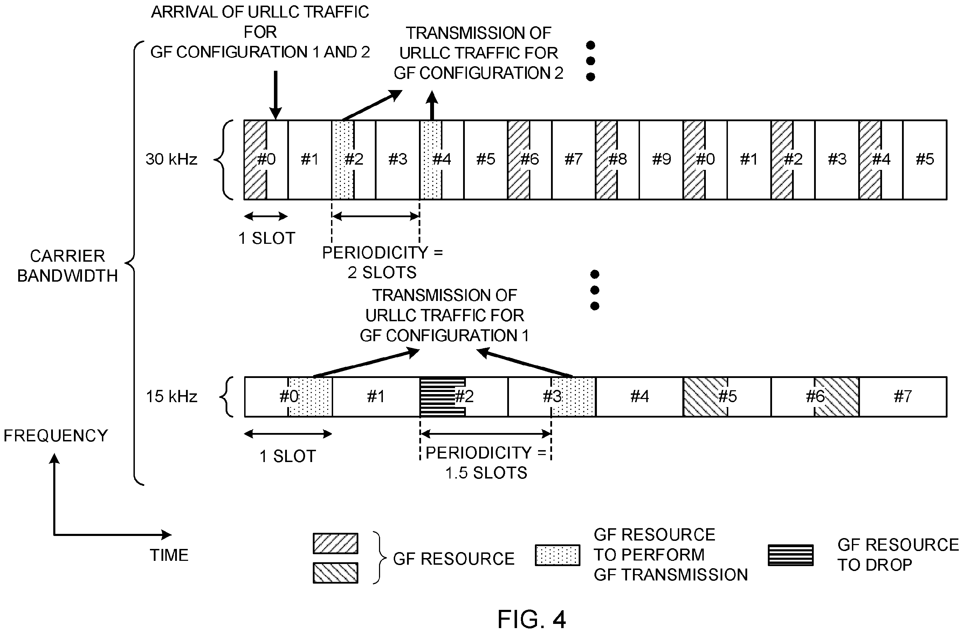

FIG. 4 is a diagram to show examples of how GF configurations are selected, based on embodiment 2.2. Here, the GF configuration, in which the numerology (SCS) is 15 kHz, the periodicity is 1.5 slots, and the transmission duration is 0.5 slot (half a slot), is shown as GF configuration 1. Here, the GF configuration, in which the numerology (SCS) is 30 kHz, the periodicity is 2 slots, and the transmission duration is 0.5 slots, is shown as GF configuration 2. In this way, the periodicity of a GF resource, the transmission duration and so forth may be specified in decimal.

The frequency resources for these GF configurations are located in frequency bands, not overlapping each other, within a carrier (component carrier) bandwidth. Also, the timings at which the slots in GF configuration 2 start or end meet the slot boundaries in GF configuration 1.

The example in FIG. 4 shows a case in which URLLC traffic for GF configurations 1 and 2 arrives at the timing of slot #0 in GF configuration 1 and at the timing of slot #0 in GF configuration 2. Here, it is assumed that the URLLC traffic for GF configuration 1 is an amount that can be transmitted using 2 slots in GF configuration 1, and that the URLLC traffic for GF configuration 2 is an amount that can be transmitted using 2 slots in GF configuration 2. Also assume that none of the URLLC traffic requires a tight latency requirement.

The earliest GF resource of GF configuration 1 after the above-noted timing of arrival of traffic is the second-half slot of slot #0 in GF configuration 1. Consequently, the UE transmits the URLLC traffic associated with GF configuration 1 in GF transmission, using the GF resources of the second-half slot of slot #0 in GF configuration 1.

The earliest GF resource of GF configuration 2 after the above-noted timing of arrival of traffic is the second-half slot of slot #0 in GF configuration 1. Consequently, the UE transmits the URLLC traffic associated with GF configuration 2 in GF transmission, using the GF resources of the first-half slot of slot #2 in GF configuration 2.

The next earliest GF resources are the first-half slot of slot #2 in GF configuration 1 and the first-half slot of slot #4 in GF configuration 2.

In this example, when a number of GF configurations collide at the same timing, the UE selects a GF configuration having a shorter transmission duration (or periodicity) among the number of GF configurations. That is, among the earliest GF resources, the UE selects the GF resource for the first-half-slot in slot #4 in GF configuration 2, in which the actual transmission duration (or periodicity) is shorter, and, by using that GF resource, transmits the URLLC traffic related to GF configuration 2 in GF transmission. In this case, the UE drops the GF resource of the first-half slot of slot #2 in GF configuration 1 (that is, the UE does not use this GF resource for transmission).

The next earliest GF resource of GF configuration 1 is the second-half slot of slot #3 in GF configuration 1. Consequently, the UE transmits the URLLC traffic associated with GF configuration 1 in GF transmission, using the GF resources of the second-half slot of slot #3 in GF configuration 1.

According to embodiment 2.2 described above, the UE can properly select the GF configurations to apply to GF transmission, even when multiple GF transmission procesures are permitted.

(Radio Communication System)

Now, the structure of a radio communication system according to one embodiment of the present invention will be described below. In this radio communication system, communication is performed using one of the radio communication methods according to the herein-contained embodiments of the present invention, or a combination of these.

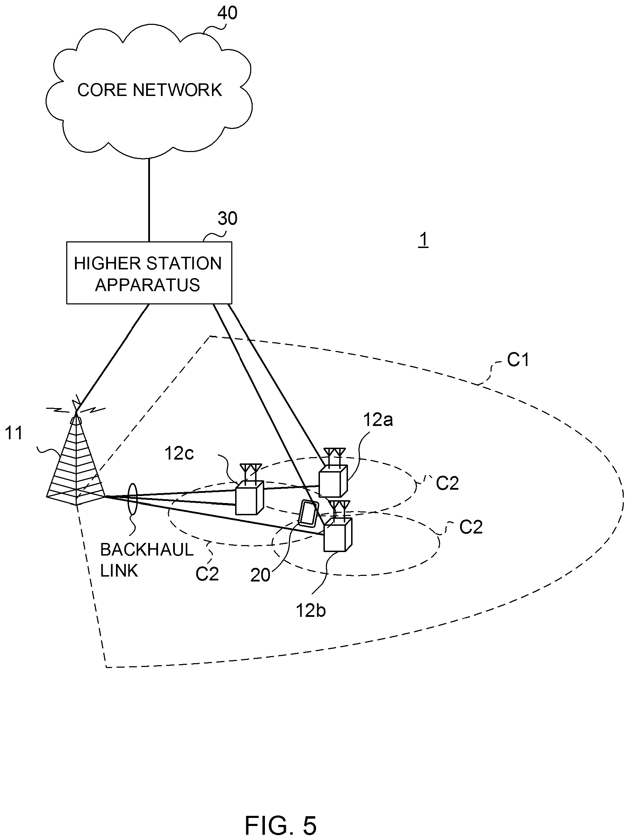

FIG. 5 is a diagram to show an exemplary schematic structure of a radio communication system according to one embodiment of the present invention. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes 1 unit.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "NR (New Radio)," "FRA (Future Radio Access)," "New-RAT (Radio Access Technology)," and so on, or may be seen as a system to implement these.

The radio communication system 1 includes a radio base station 11 that forms a macro cell C1, with a relatively wide coverage, and radio base stations 12a to 12c that are placed within the macro cell C1 and that form small cells C2, which are narrower than the macro cell C1. Also, user terminals 20 are placed in the macro cell C1 and in each small cell C2. The arrangement and number of cells and user terminals 20 are not limited to those illustrated in the drawing.

The user terminals 20 can connect with both the radio base station 11 and the radio base stations 12. The user terminals 20 may use the macro cell C1 and the small cells C2 at the same time by means of CA or DC. Furthermore, the user terminals 20 may apply CA or DC using a plurality of cells (CCs) (for example, five or fewer CCs or six or more CCs).

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Note that the structure of the frequency band for use in each radio base station is by no means limited to these.

Furthermore, the user terminals 20 can communicate by using time division duplexing (TDD) and/or frequency division duplexing (FDD), in each cell. Furthermore, in each cell (carrier), a single numerology may be used, or a plurality of different numerologies may be used.

A numerology may refer to communication parameters that are applied to transmission and/or receipt of a given signal and/or channel, and represent at least one of the subcarrier spacing, the bandwidth, the length of symbols, the length of cyclic prefixes, the length of subframes, the length of TTIs, the number of symbols per TTI, the radio frame configuration, the filtering process, the windowing process and so on.

The radio base station 11 and a radio base station 12 (or 2 radio base stations 12) may be connected with each other by cables (for example, by optical fiber, which is in compliance with the CPRI (Common Public Radio Interface), the X2 interface and so on), or by radio.

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. Also, the radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals (mobile stations) or stationary communication terminals (fixed stations).

In the radio communication system 1, as radio access schemes, orthogonal frequency division multiple access (OFDMA) is applied to the downlink, and single-carrier frequency division multiple access (SC-FDMA) and/or OFDMA are applied to the uplink.

OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that, uplink and downlink radio access schemes are not limited to these combinations, and other radio access schemes may be used.

In the radio communication system 1, a downlink shared channel (PDSCH (Physical Downlink Shared CHannel)), which is used by each user terminal 20 on a shared basis, a broadcast channel (PBCH (Physical Broadcast CHannel)), downlink L1/L2 control channels and so on are used as downlink channels. User data, higher layer control information, SIBs (System Information Blocks) and so on are communicated in the PDSCH. Also, the MIB (Master Information Blocks) is communicated in the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI), which includes PDSCH and/or PUSCH scheduling information, is communicated by the PDCCH.

Note that scheduling information may be reported in DCI. For example, DCI to schedule receipt of DL data may be referred to as a "DL assignment," and DCI to schedule UL data transmission may also be referred to as a "UL grant."

The number of OFDM symbols to use for the PDCCH is communicated by the PCFICH. HARQ (Hybrid Automatic Repeat reQuest) delivery acknowledgment information (also referred to as, for example, "retransmission control information," "HARQ-ACKs," "ACK/NACKs," etc.) in response to the PUSCH is transmitted by the PHICH. The EPDCCH is frequency-division-multiplexed with the PDSCH (downlink shared data channel) and used to communicate DCI and so on, like the PDCCH.

In the radio communication system 1, an uplink shared channel (PUSCH (Physical Uplink Shared CHannel)), which is used by each user terminal 20 on a shared basis, an uplink control channel (PUCCH (Physical Uplink Control CHannel), a random access channel (PRACH (Physical Random Access CHannel)) and so on are used as uplink channels. User data, higher layer control information and so on are communicated by the PUSCH. Also, in the PUCCH, downlink radio quality information (CQI (Channel Quality Indicator)), delivery acknowledgment information, scheduling requests (SRs) and so on are communicated. By means of the PRACH, random access preambles for establishing connections with cells are communicated.

In the radio communication system 1, cell-specific reference signals (CRSs), channel state information reference signals (CSI-RSs), demodulation reference signals (DMRSs), positioning reference signals (PRSs) and so on are communicated as downlink reference signals. Also, in the radio communication system 1, measurement reference signals (SRSs (Sounding Reference Signals)), demodulation reference signals (DMRSs) and so on are communicated as uplink reference signals. Note that the DMRSs may be referred to as "user terminal-specific reference signals (UE-specific reference signals)." Also, the reference signals to be communicated are by no means limited to these.

(Radio Base Station)

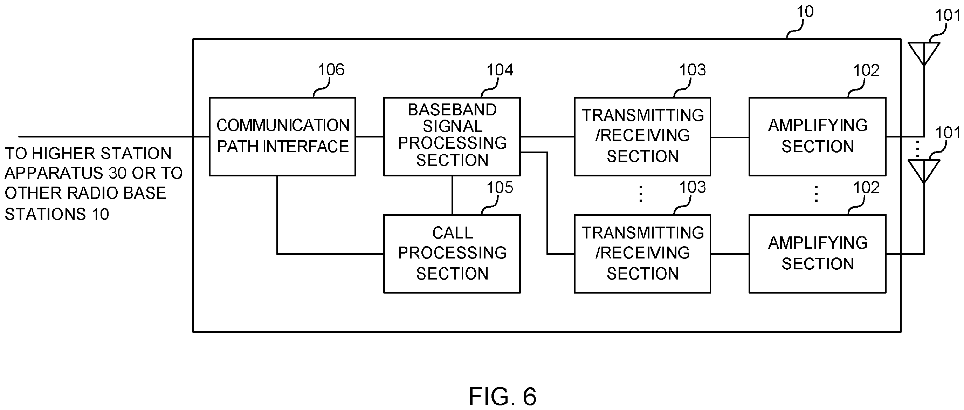

FIG. 6 is a diagram to show an exemplary overall structure of a radio base station according to one embodiment of the present invention. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to transmission processes, including a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Baseband signals that are pre-coded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted by transmitters/receivers, transmitting/receiving circuits or transmitting/receiving apparatus that can be described based on general understanding of the technical field to which the present invention pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (such as setting up and releasing communication channels), manages the state of the radio base stations 10 and manages the radio resources.

The communication path interface section 106 transmits and receives signals to and from the higher station apparatus 30 via a given interface. Also, the communication path interface 106 may transmit and receive signals (backhaul signaling) with other radio base stations 10 via an inter-base station interface (which is, for example, optical fiber that is in compliance with the CPRI (Common Public Radio Interface), the X2 interface, etc.).

The transmitting/receiving sections 103 receive data from a user terminal 20, which has been transmitted in GF transmission, in which UL data is transmitted without UL transmission commands (UL grants) from the radio base station 10.

Also, the transmitting/receiving sections 103 may transmit information about one or more GF configurations, information about the order of priorities of GF configurations, information about the order of priorities of UL grant-based transmission and GF transmission, and so forth, from the user terminal 20.

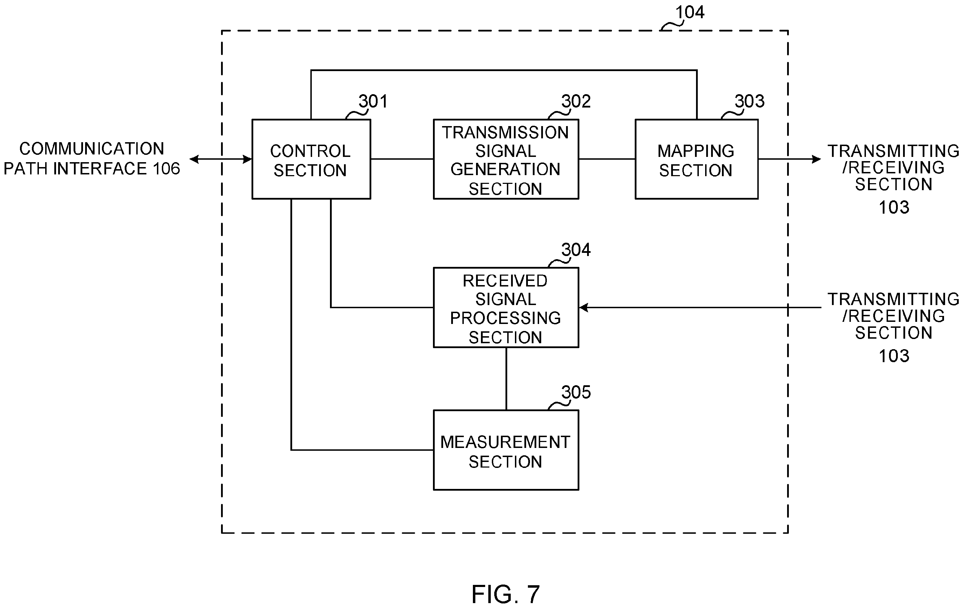

FIG. 7 is a diagram to show an exemplary functional structure of a radio base station according to one embodiment of the present invention. Note that, although this example primarily shows functional blocks that pertain to characteristic parts of the present embodiment, the radio base station 10 has other functional blocks that are necessary for radio communication as well.

The baseband signal processing section 104 at least has a control section (scheduler) 301, a transmission signal generation section 302, a mapping section 303, a received signal processing section 304 and a measurement section 305. Note that these configurations have only to be included in the radio base station 10, and some or all of these configurations may not be included in the baseband signal processing section 104.

The control section (scheduler) 301 controls the whole of the radio base station 10. The control section 301 can be constituted by a controller, a control circuit or control apparatus that can be described based on general understanding of the technical field to which the present invention pertains.

The control section 301 controls, for example, generation of signals in the transmission signal generation section 302, allocation of signals in the mapping section 303, and so on. Furthermore, the control section 301 controls signal receiving processes in the received signal processing section 304, measurements of signals in the measurement section 305, and so on.

The control section 301 controls the scheduling (for example, resource allocation) of system information, downlink data signals (for example, signals transmitted in the PDSCH) and downlink control signals (for example, signals transmitted in the PDCCH and/or the EPDCCH, such as delivery acknowledgment information). Also, the control section 301 controls the generation of downlink control signals, downlink data signals and so on, based on the results of deciding whether or not retransmission control is necessary for uplink data signals, and so on. Also, the control section 301 controls the scheduling of synchronization signals (for example, the PSS (Primary Synchronization Signal)/SSS (Secondary Synchronization Signal)), downlink reference signals (for example, the CRS, the CSI-RS, the DMRS, etc.) and so on.

The control section 301 also controls the scheduling of uplink data signals (for example, signals transmitted in the PUSCH), uplink control signals (for example, signals transmitted in the PUCCH and/or the PUSCH, such as delivery acknowledgment information), random access preambles (for example, signals transmitted in the PRACH), and uplink reference signals.

The control section 301 may exert control so that the GF configurations to apply to GF transmission are transmitted to the user terminal 20. Also, the control section 301 may exert control so that, when a number of GF configurations are configured, information for selecting the GF configuration to apply to (to actually use for) GF transmission at a given timing is transmitted.

The transmission signal generation section 302 generates downlink signals (downlink control signals, downlink data signals, downlink reference signals and so on) based on commands from the control section 301, and outputs these signals to the mapping section 303. The transmission signal generation section 302 can be constituted by a signal generator, a signal generating circuit or signal generating apparatus that can be described based on general understanding of the technical field to which the present invention pertains.

For example, the transmission signal generation section 302 generates DL assignments, which report downlink data allocation information, and/or UL grants, which report uplink data allocation information, based on commands from the control section 301. DL assignments and UL grants are both DCI, in compliance with DCI format. Also, the downlink data signals are subjected to the coding process, the modulation process and so on, by using coding rates and modulation schemes that are determined based on, for example, channel state information (CSI) from each user terminal 20.

The mapping section 303 maps the downlink signals generated in the transmission signal generation section 302 to given radio resources based on commands from the control section 301, and outputs these to the transmitting/receiving sections 103. The mapping section 303 can be constituted by a mapper, a mapping circuit or mapping apparatus that can be described based on general understanding of the technical field to which the present invention pertains.

The received signal processing section 304 performs receiving processes (for example, demapping, demodulation, decoding and so on) of received signals that are input from the transmitting/receiving sections 103. Here, the received signals include, for example, uplink signals transmitted from the user terminal 20 (uplink control signals, uplink data signals, uplink reference signals, etc.). For the received signal processing section 304, a signal processor, a signal processing circuit or signal processing apparatus that can be described based on general understanding of the technical field to which the present invention pertains can be used.

The received signal processing section 304 outputs the decoded information acquired through the receiving processes, to the control section 301. For example, when a PUCCH to contain an HARQ-ACK is received, the received signal processing section 304 outputs this HARQ-ACK to the control section 301. Also, the received signal processing section 304 outputs the received signals and/or the signals after the receiving processes to the measurement section 305.

The measurement section 305 conducts measurements with respect to the received signals. The measurement section 305 can be constituted by a measurer, a measurement circuit or measurement apparatus that can be described based on general understanding of the technical field to which the present invention pertains.

For example, the measurement section 305 may perform RRM (Radio Resource Management) measurements, CSI (Channel State Information) measurements and so on, based on the received signals. The measurement section 305 may measure the received power (for example, RSRP (Reference Signal Received Power)), the received quality (for example, RSRQ (Reference Signal Received Quality), SINR (Signal to Interference plus Noise Ratio), etc.), SNR (Signal to Noise Ratio), the signal strength (for example, RSSI (Received Signal Strength Indicator)), transmission path information (for example, CSI), and so on. The measurement results may be output to the control section 301.

(User Terminal)

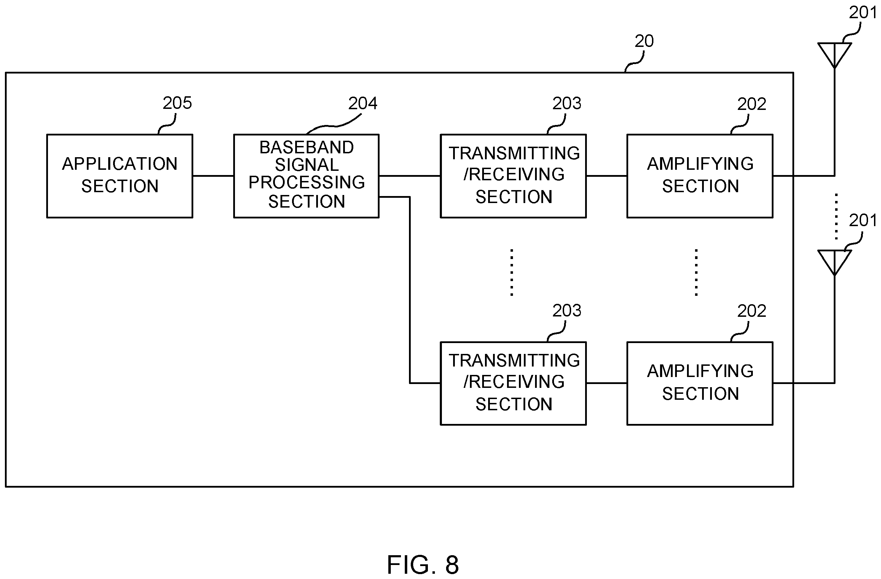

FIG. 8 is a diagram to show an exemplary overall structure of a user terminal according to one embodiment of the present invention. A user terminal 20 has a plurality of transmitting/receiving antennas 201, amplifying sections 202, transmitting/receiving sections 203, a baseband signal processing section 204 and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving sections 203 receive the downlink signals amplified in the amplifying sections 202. The received signals are subjected to frequency conversion and converted into the baseband signal in the transmitting/receiving sections 203, and output to the baseband signal processing section 204. A transmitting/receiving section 203 can be constituted by a transmitters/receiver, a transmitting/receiving circuit or transmitting/receiving apparatus that can be described based on general understanding of the technical field to which the present invention pertains. Note that a transmitting/receiving section 203 may be structured as a transmitting/receiving section in one entity, or may be constituted by a transmitting section and a receiving section.

The baseband signal processing section 204 performs, for the baseband signal that is input, an FFT process, error correction decoding, a retransmission control receiving process and so on. Downlink user data is forwarded to the application section 205. The application section 205 performs processes related to higher layers above the physical layer and the MAC layer, and so on. Also, in the downlink data, the broadcast information can be also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving sections 203. The baseband signal that is output from the baseband signal processing section 204 is converted into a radio frequency band in the transmitting/receiving sections 203. The radio frequency signals that are subjected to frequency conversion in the transmitting/receiving sections 203 are amplified in the amplifying sections 202, and transmitted from the transmitting/receiving antennas 201.

The transmitting/receiving sections 203 transmit UL data without UL transmission commands (UL grants) from the radio base station 10.

Also, the transmitting/receiving sections 103 may receive, from the radio base station 10, information about one or more GF configurations, information about the order of priorities of GF configurations, information about the order of priorities of UL grant-based transmission and GF transmission, and so forth.

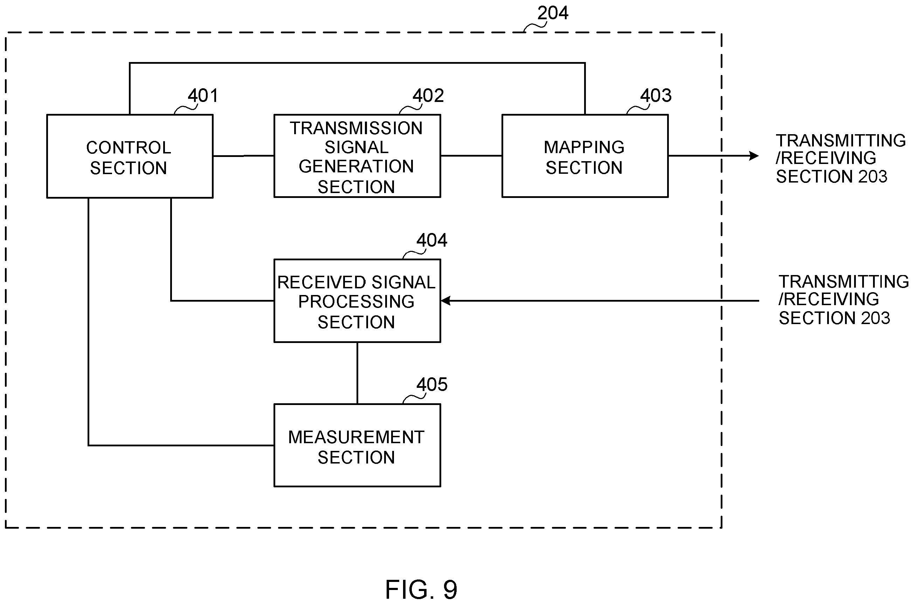

FIG. 9 is a diagram to show an exemplary functional structure of a user terminal according to one embodiment of the present invention. Note that, although this example primarily shows functional blocks that pertain to characteristic parts of the present embodiment, the user terminal 20 has other functional blocks that are necessary for radio communication as well.

The baseband signal processing section 204 provided in the user terminal 20 at least has a control section 401, a transmission signal generation section 402, a mapping section 403, a received signal processing section 404 and a measurement section 405. Note that these configurations have only to be included in the user terminal 20, and some or all of these configurations may not be included in the baseband signal processing section 204.

The control section 401 controls the whole of the user terminal 20. For the control section 401, a controller, a control circuit or control apparatus that can be described based on general understanding of the technical field to which the present invention pertains can be used.

The control section 401 controls, for example, generation of signals in the transmission signal generation section 402, allocation of signals in the mapping section 403, and so on. Furthermore, the control section 401 controls signal receiving processes in the received signal processing section 404, measurements of signals in the measurement section 405, and so on.

The control section 401 acquires the downlink control signals and downlink data signals transmitted from the radio base station 10, via the received signal processing section 404. The control section 401 controls the generation of uplink control signals and/or uplink data signals based on the results of deciding whether or not retransmission control is necessary for the downlink control signals and/or downlink data signals, and so on.

The control section 401 controls GF transmission based on GF configurations (configurations for UL data transmission, not based on UL transmission commands from the radio base station 10). Also, when there are a number of GF configurations, the control section 401 may select the GF configuration to apply to (to actually use in) GF transmission at a given timing.

GF configurations may include parameters related to numerologies, and may include the number of HARQ processes and/or HARQ process numbers.

The control section 401 may apply the GF configuration corresponding to the earliest GF resource, to GF transmission. If UL data is related with a given LCG, the control section 401 may use the GF configuration configured for that LCG for GF transmission. Also, if multiple GF resources based on different GF configurations overlap in time, the control section 401 may apply GF configurations that are selected based on given rules, to GF transmission.

Furthermore, when various kinds of information reported from the radio base station 10 are acquired via the received signal processing section 404, the control section 401 may update the parameters to use in control based on these pieces of information.

The transmission signal generation section 402 generates uplink signals (uplink control signals, uplink data signals, uplink reference signals, etc.) based on commands from the control section 401, and outputs these signals to the mapping section 403. The transmission signal generation section 402 can be constituted by a signal generator, a signal generating circuit or signal generation apparatus that can be described based on general understanding of the technical field to which the present invention pertains.

For example, the transmission information generation section 402 generates uplink control signals such as delivery acknowledgement information, channel state information (CSI) and so on, based on commands from the control section 401. Also, the transmission signal generation section 402 generates uplink data signals based on commands from the control section 401. For example, when a UL grant is included in a downlink control signal that is reported from the radio base station 10, the control section 401 commands the transmission signal generation section 402 to generate an uplink data signal.

The mapping section 403 maps the uplink signals generated in the transmission signal generation section 402 to radio resources based on commands from the control section 401, and output the result to the transmitting/receiving sections 203. The mapping section 403 can be constituted by a mapper, a mapping circuit or mapping apparatus that can be described based on general understanding of the technical field to which the present invention pertains.

The received signal processing section 404 performs receiving processes (for example, demapping, demodulation, decoding and so on) of received signals that are input from the transmitting/receiving sections 203. Here, the received signals include, for example, downlink signals (downlink control signals, downlink data signals, downlink reference signals and so on) that are transmitted from the radio base station 10. The received signal processing section 404 can be constituted by a signal processor, a signal processing circuit or signal processing apparatus that can be described based on general understanding of the technical field to which the present invention pertains. Also, the received signal processing section 404 can constitute the receiving section according to the present invention.

The received signal processing section 404 outputs the decoded information acquired through the receiving processes, to the control section 401. The received signal processing section 404 outputs, for example, broadcast information, system information, RRC signaling, DCI and so on, to the control section 401. Also, the received signal processing section 404 outputs the received signals and/or the signals after the receiving processes to the measurement section 405.

The measurement section 405 conducts measurements with respect to the received signals. The measurement section 405 can be constituted by a measurer, a measurement circuit or measurement apparatus that can be described based on general understanding of the technical field to which the present invention pertains.

For example, the measurement section 405 may perform RRM measurements, CSI measurements, and so on, based on the received signals. The measurement section 405 may measure the received power (for example, RSRP), the received quality (for example, RSRQ, SINR, SNR, etc.), the signal strength (for example, RSSI), transmission path information (for example, CSI) and so on. The measurement results may be output to the control section 401.

(Hardware Structure)

Note that the block diagrams that have been used to describe the above embodiments show blocks in functional units. These functional blocks (components) may be implemented in arbitrary combinations of hardware and/or software. Also, the method for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire or wireless, for example) and using these multiple pieces of apparatus.

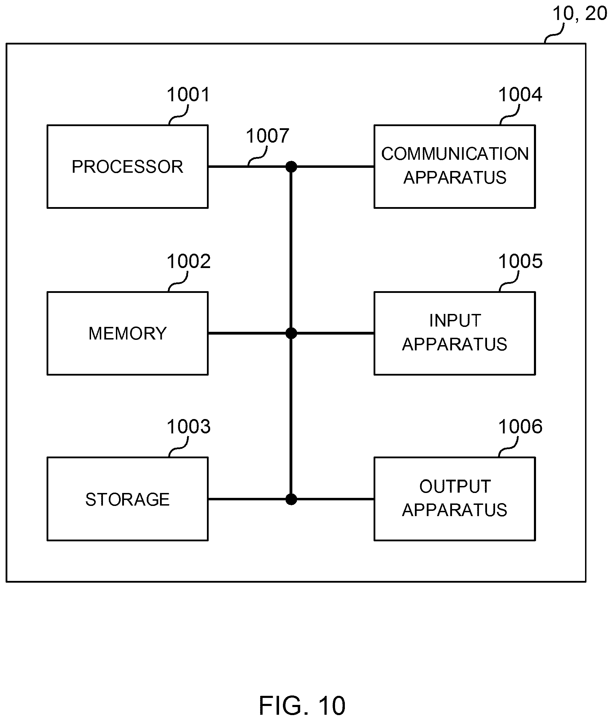

For example, the radio base station, user terminals and so on according to one embodiment of the present invention may function as a computer that executes the processes of the radio communication method of the present invention. FIG. 10 is a diagram to show an exemplary hardware structure of a radio base station and a user terminal according to one embodiment of the present invention. Physically, the above-described radio base stations 10 and user terminals 20 may be formed as a computer apparatus that includes a processor 1001, a memory 1002, a storage 1003, communication apparatus 1004, input apparatus 1005, output apparatus 1006 and a bus 1007.

Note that, in the following description, the word "apparatus" may be replaced by "circuit," "device," "unit" and so on. Note that the hardware structure of a radio base station 10 and a user terminal 20 may be designed to include one or more of each apparatus shown in the drawings, or may be designed not to include part of the apparatus.

For example, although only 1 processor 1001 is shown, a plurality of processors may be provided. Furthermore, processes may be implemented with 1 processor, or processes may be implemented in sequence, or in different manners, on one or more processors. Note that the processor 1001 may be implemented with one or more chips.

The functions of the radio base station 10 and the user terminal 20 are implemented by allowing hardware such as the processor 1001 and the memory 1002 to read given software (programs), thereby allowing the processor 1001 to do calculations, the communication apparatus 1004 to communicate, and the memory 1002 and the storage 1003 to read and/or write data.

The processor 1001 may control the whole computer by, for example, running an operating system. The processor 1001 may be configured with a central processing unit (CPU), which includes interfaces with peripheral apparatus, control apparatus, computing apparatus, a register and so on. For example, the above-described baseband signal processing section 104 (204), call processing section 105 and so on may be implemented by the processor 1001.

Furthermore, the processor 1001 reads programs (program codes), software modules, data and so forth from the storage 1003 and/or the communication apparatus 1004, into the memory 1002, and executes various processes according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register," a "cache," a "main memory" (primary storage apparatus) and so on. The memory 1002 can store executable programs (program codes), software modules and so on for implementing the radio communication methods according to embodiments of the present invention.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving apparatus) for allowing inter-computer communication by using wired and/or wireless networks, and may be referred to as, for example, a "network device," a "network controller," a "network card," a "communication module" and so on. The communication apparatus 1004 may be configured to include a high frequency switch, a duplexer, a filter, a frequency synthesizer and so on in order to realize, for example, frequency division duplex (FDD) and/or time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp and so on). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

(Variations)

Note that the terminology used in this specification and the terminology that is needed to understand this specification may be replaced by other terms that convey the same or similar meanings. For example, "channels" and/or "symbols" may be replaced by "signals" (or "signaling"). Also, "signals" may be "messages." A reference signal may be abbreviated as an "RS," and may be referred to as a "pilot," a "pilot signal" and so on, depending on which standard applies. Furthermore, a "component carrier (CC)" may be referred to as a "cell," a "frequency carrier," a "carrier frequency" and so on.

Furthermore, a radio frame may be comprised of one or more periods (frames) in the time domain. Each of one or more periods (frames) constituting a radio frame may be referred to as a "subframe." Furthermore, a subframe may be comprised of one or multiple slots in the time domain. A subframe may be a fixed time duration (for example, 1 ms) not dependent on the numerology.

Furthermore, a slot may be comprised of one or more symbols in the time domain (OFDM (Orthogonal Frequency Division Multiplexing) symbols, SC-FDMA (Single Carrier Frequency Division Multiple Access) symbols, and so on). Also, a slot may be a time unit based on numerology. Also, a slot may include a plurality of minislots. Each minislot may be comprised of one or more symbols in the time domain. Also, a minislot may be referred to as a "subslot."

A radio frame, a subframe, a slot, a minislot and a symbol all represent the time unit in signal communication. A radio frame, a subframe, a slot, a minislot and a symbol may be each called by other applicable names. For example, 1 subframe may be referred to as a "transmission time interval (TTI)," or a plurality of consecutive subframes may be referred to as a "TTI," or 1 slot or mini-slot may be referred to as a "TTI." That is, a subframe and/or a TTI may be a subframe (1 ms) in existing LTE, may be a shorter period than 1 ms (for example, 1 to 13 symbols), or may be a longer period of time than 1 ms. Note that the unit to represent the TTI may be referred to as a "slot," a "mini slot" and so on, instead of a "subframe."

Here, a TTI refers to the minimum time unit of scheduling in radio communication, for example. For example, in LTE systems, a radio base station schedules the radio resources (such as the frequency bandwidth and transmission power that can be used in each user terminal) to allocate to each user terminal in TTI units. Note that the definition of TTIs is not limited to this.

The TTI may be the transmission time unit of channel-encoded data packets (transport blocks), code blocks and/or codewords, or may be the unit of processing in scheduling, link adaptation and so on. Note that, when a TTI is given, the period of time (for example, the number of symbols) in which transport blocks, code blocks and/or codewords are actually mapped may be shorter than the TTI.

Note that, when 1 slot or 1 minislot is referred to as a "TTI," one or more TTIs (that is, one or multiple slots or one or more minislots) may be the minimum time unit of scheduling. Also, the number of slots (the number of minislots) to constitute this minimum time unit of scheduling may be controlled.

A TTI having a time duration of 1 ms may be referred to as a "normal TTI" (TTI in LTE Rel. 8 to 12), a "long TTI," a "normal subframe," a "long subframe," and so on. A TTI that is shorter than a normal TTI may be referred to as a "shortened TTI," a "short TTI," a "partial TTI" (or a "fractional TTI"), a "shortened subframe," a "short subframe," a "mini-slot," a "sub-slot" and so on.

Note that a long TTI (for example, a normal TTI, a subframe, etc.) may be replaced with a TTI having a time duration exceeding 1 ms, and a short TTI (for example, a shortened TTI) may be replaced with a TTI having a TTI length less than the TTI length of a long TTI and not less than 1 ms.

A resource block (RB) is the unit of resource allocation in the time domain and the frequency domain, and may include one or a plurality of consecutive subcarriers in the frequency domain. Also, an RB may include one or more symbols in the time domain, and may be 1 slot, 1 minislot, 1 subframe or 1 TTI in length. 1 TTI and 1 subframe each may be comprised of one or more resource blocks. Note that one or more RBs may be referred to as a "physical resource block (PRB (Physical RB))," a "subcarrier group (SCG)," a "resource element group (REG)," a "PRB pair," an "RB pair" and so on.

Furthermore, a resource block may be comprised of one or more resource elements (REs). For example, 1 RE may be a radio resource field of 1 subcarrier and 1 symbol.

Note that the structures of radio frames, subframes, slots, minislots, symbols and so on described above are merely examples. For example, configurations pertaining to the number of subframes included in a radio frame, the number of slots included per subframe or radio frame, the number of mini-slots included in a slot, the number of symbols and RBs included in a slot or a mini-slot, the number of subcarriers included in an RB, the number of symbols in a TTI, the symbol duration, the length of cyclic prefixes (CPs) and so on can be variously changed.

Also, the information and parameters described in this specification may be represented in absolute values or in relative values with respect to given values, or may be represented using other applicable information. For example, a radio resource may be specified by a given index.

The names used for parameters and so on in this specification are in no respect limiting. For example, since various channels (PUCCH (Physical Uplink Control CHannel), PDCCH (Physical Downlink Control CHannel) and so on) and information elements can be identified by any suitable names, the various names assigned to these individual channels and information elements are in no respect limiting.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals and so on can be output from higher layers to lower layers and/or from lower layers to higher layers. Information, signals and so on may be input and/or output via a plurality of network nodes.

The information, signals and so on that are input and/or output may be stored in a specific location (for example, in a memory), or may be managed in a control table. The information, signals and so on to be input and/or output can be overwritten, updated or appended. The information, signals and so on that are output may be deleted. The information, signals and so on that are input may be transmitted to other pieces of apparatus.

Reporting of information is by no means limited to the examples/embodiments described in this specification, and other methods may be used as well. For example, reporting of information may be implemented by using physical layer signaling (for example, downlink control information (DCI), uplink control information (UCI)), higher layer signaling (for example, RRC (Radio Resource Control) signaling, broadcast information (the master information block (MIB), system information blocks (SIBs) and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)" and so on. Also, RRC signaling may be referred to as "RRC messages," and can be, for example, an RRC connection setup message, RRC connection reconfiguration message, and so on. Also, MAC signaling may be reported using, for example, MAC control elements (MAC CEs (Control Elements)).

Also, reporting of given information (for example, reporting of information to the effect that "X holds") does not necessarily have to be sent explicitly, and can be sent in an implicit way (for example, by not reporting this piece of information, by reporting another piece of information, and so on).

Decisions may be made in values represented by 1 bit (0 or 1), may be made in Boolean values that represent true or false, or may be made by comparing numerical values (for example, comparison against a given value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server or other remote sources by using wired technologies (coaxial cables, optical fiber cables, twisted-pair cables, digital subscriber lines (DSL) and so on) and/or wireless technologies (infrared radiation, microwaves and so on), these wired technologies and/or wireless technologies are also included in the definition of communication media.

The terms "system" and "network" as used herein are used interchangeably.

As used herein, the terms "base station (BS)," "radio base station," "eNB," "gNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or more (for example, 3) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part or all of the coverage area of a base station and/or a base station subsystem that provides communication services within this coverage.

As used herein, the terms "mobile station (MS)" "user terminal," "user equipment (UE)" and "terminal" may be used interchangeably. A base station may be referred to as a "fixed station," "NodeB," "eNodeB (eNB)," "access point," "transmission point," "receiving point," "femto cell," "small cell" and so on.

A mobile station may be referred to, by a person skilled in the art, as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client" or some other suitable terms.

Furthermore, the radio base stations in this specification may be interpreted as user terminals. For example, each aspect/embodiment of the present invention may be applied to a configuration in which communication between a radio base station and a user terminal is replaced with communication among a plurality of user terminals (D2D (Device-to-Device)). In this case, user terminals 20 may have the functions of the radio base stations 10 described above. In addition, terms such as "uplink" and "downlink" may be interpreted as "side." For example, an "uplink channel" may be interpreted as a "side channel."

Likewise, the user terminals in this specification may be interpreted as radio base stations. In this case, the radio base stations 10 may have the functions of the user terminals 20 described above.

Certain actions which have been described in this specification to be performed by base stations may, in some cases, be performed by their upper nodes. In a network comprised of one or more network nodes with base stations, it is clear that various operations that are performed so as to communicate with terminals can be performed by base stations, one or more network nodes (for example, MMEs (Mobility Management Entities), S-GWs (Serving-Gateways) and so on may be possible, but these are not limiting) other than base stations, or combinations of these.

The aspects/embodiments illustrated in this specification may be used individually or in combinations, which may be switched depending on the mode of implementation. The order of processes, sequences, flowcharts and so on that have been used to describe the aspects/embodiments herein may be re-ordered as long as inconsistencies do not arise. For example, although various methods have been illustrated in this specification with various components of steps in exemplary orders, the specific orders that are illustrated herein are by no means limiting.

The aspects/embodiments illustrated in this specification may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR (New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication systems and/or next-generation systems that are enhanced based on these.

The phrase "based on" as used in this specification does not mean "based only on," unless otherwise specified. In other words, the phrase "based on" means both "based only on" and "based at least on."

Reference to elements with designations such as "first," "second" and so on as used herein does not generally limit the number/quantity or order of these elements. These designations are used herein only for convenience, as a method for distinguishing between two or more elements. In this way, reference to the first and second elements does not imply that only 2 elements may be employed, or that the first element must precede the second element in some way.

The terms "judge" and "determine" as used herein may encompass a wide variety of actions. For example, to "judge" and "determine" as used herein may be interpreted to mean making judgements and determinations related to calculating, computing, processing, deriving, investigating, looking up (for example, searching a table, a database or some other data structure), ascertaining and so on. Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on. In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

As used herein, the terms "connected" and "coupled," or any variation of these terms, mean all direct or indirect connections or coupling between two or more elements, and may include the presence of one or more intermediate elements between 2 elements that are "connected" or "coupled" to each other. The coupling or connection between the elements may be physical, logical or a combination of these. For example, "connection" may be interpreted as "access."

As used herein, when 2 elements are connected, these elements may be considered "connected" or "coupled" to each other by using one or more electrical wires, cables and/or printed electrical connections, and, as a number of non-limiting and non-inclusive examples, by using electromagnetic energy, such as electromagnetic energy having wavelengths in the radio frequency, microwave and optical (both visible and invisible) regions.

In the present specification, the phrase "A and B are different" may mean "A and B are different from each other." The terms such as "leave" "coupled" and the like may be interpreted as well.

When terms such as "include," "comprise" and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described herein. The present invention can be implemented with various corrections and in various modifications, without departing from the scope of the present invention defined by the recitations of claims. Consequently, the description herein is provided only for the purpose of explaining examples, and should by no means be construed to limit the present invention in any way.

**Claims**

1. A terminal (20) comprising:

   a receiving section (203) adapted to receive at least one configuration by higher layer signaling, the at least one configuration each including information on a periodicity of physical uplink shared channel, PUSCH, transmission and information on a time domain resource and a frequency domain resource of the PUSCH transmission , the at least one configuration each corresponding to a band in one cell; and
   a control section (401) adapted to, when the receiving section receives multiple configurations in one cell, perform corresponding PUSCH transmission in accordance with only one of the multiple configurations at a certain time.

2. The terminal (20) according to claim 1, wherein the multiple configurations each include information of at least one of a parameter relating to a demodulation reference signal, Modulation and Coding Scheme, MCS, a parameter relating to power control, whether or not to apply discrete Fourier transform precoding, a number of Hybrid Automatic Repeat request, HARQ, processes, a number of repetitions K, and a redundancy version, RV.

3. A radio communication method for a terminal, comprising:

   receiving at least one configuration by higher layer signaling, the at least one configuration each including information on a periodicity of physical uplink shared channel, PUSCH, transmission and information on a time domain resource and a frequency domain resource of the PUSCH transmission, the at least one configuration each corresponding to a band in one cell; and
   when the terminal receives multiple configurations in one cell, performing corresponding PUSCH transmission in accordance with only one of the multiple configurations at a certain time.

4. A base station (10) comprising:

   a transmitting section (103) adapted to transmit at least one configuration by higher layer signaling, the at least one configuration each including information on a periodicity of physical uplink shared channel, PUSCH, transmission and information on a time domain resource and a frequency domain resource of the PUSCH transmission, the at least one configuration each corresponding to a band in one cell; and
   a control section (301) adapted to perform a control of a reception of corresponding PUSCH transmission, that is transmitted by a terminal in accordance with only one of the multiple configuration at a certain time.

5. A system (1) comprising a terminal (20) and a base station (10), wherein

   the terminal (20) comprises:

      a receiving section (203) adapted to receive at least one configuration by higher layer signaling, the at least one configuration each including information on a periodicity of physical uplink shared channel, PUSCH, transmission and information on a time domain resource and a frequency domain resource of the PUSCH transmission, the at least one configuration each corresponding to a band in one cell; and
a control section (401) adapted to, when the receiving section receives multiple configurations in one cell, perform corresponding PUSCH transmission in accordance with only one of the multiple configurations at a certain time,

the base station (10) comprises:

a transmitting section (103) adapted to transmit the at least one configuration; and
a control section (301) adapted to perform a control of a reception of the corresponding PUSCH transmission.


**Patentansprüche**

1. Endgerät (20), umfassend:

einen Empfangsabschnitt (203), der angepasst ist, um mindestens eine Konfiguration durch Signalisierung auf höherer Ebene zu empfangen, wobei die mindestens eine Konfiguration jeweils eine Information über eine Periodizität einer Übertragung auf einem gemeinsam genutzten physikalischen Aufwärtsverbindungskanal, PUSCH, und eine Information über eine Zeitbereichsressource und eine Frequenzbereichsressource der PUSCH-Übertragung einschließt, wobei die mindestens eine Konfiguration jeweils einem Band in einer Zelle entspricht; und
einen Steuerabschnitt (401), der angepasst ist, um bei einem Empfang mehrerer Konfigurationen in einer Zelle durch den Empfangsabschnitt eine entsprechende PUSCH-Übertragung in Übereinstimmung mit nur einer der mehreren Konfigurationen zu einer bestimmten Zeit durchzuführen.

2. Endgerät (20) nach Anspruch 1, wobei die mehreren Konfigurationen jeweils eine Information über mindestens einen Parameter einschließen, der sich auf ein Demodulationsreferenzsignal, ein Modulations- und Codierungsschema, MCS, einen Parameter, der sich auf die Leistungssteuerung bezieht, die Frage, ob eine diskrete Fourier-Transformationsvorcodierung angewendet werden soll oder nicht, eine Anzahl von hybriden automatischen Wiederholungsanfrage- ,HARQ-, Prozessen, eine Anzahl von Wiederholungen K und eine Redundanzversion, RV, bezieht.

3. Funkkommunikationsverfahren für ein Endgerät, umfassend:

Empfangen mindestens einer Konfiguration durch Signalisierung auf höherer Ebene, wobei die mindestens eine Konfiguration jeweils eine Information über eine Periodizität einer Übertragung auf einem gemeinsam genutzten physikalischen Aufwärtsverbindungskanal, PUSCH, und eine Information über eine Zeitbereichsressource und eine Frequenzbereichsressource der PUSCH-Übertragung aufweist, wobei die mindestens eine Konfiguration jeweils einem Band in einer Zelle entspricht; und
wenn das Endgerät mehrere Konfigurationen in einer Zelle empfängt, Durchführen einer entsprechenden PUSCH-Übertragung in Übereinstimmung mit nur einer der mehreren Konfigurationen zu einer bestimmten Zeit.

4. Basisstation (10), umfassend:

einen Übertragungsabschnitt (103), der angepasst ist, um mindestens eine Konfiguration durch Signalisierung auf höherer Ebene zu übertragen, wobei die mindestens eine Konfiguration jeweils eine Information über eine Periodizität einer Übertragung auf einem gemeinsam genutzten physikalischen Aufwärtsverbindungskanal, PUSCH, und eine Information über eine Zeitbereichsressource und eine Frequenzbereichsressource der PUSCH-Übertragung einschließt, wobei die mindestens eine Konfiguration jeweils einem Band in einer Zelle entspricht; und
einen Steuerabschnitt (301), der angepasst ist, um eine Steuerung eines Empfangs einer entsprechenden PUSCH-Übertragung durchzuführen, die von einem Endgerät in Übereinstimmung mit nur einer der mehreren Konfigurationen zu einer bestimmten Zeit übertragen wird.

5. System (1), das ein Endgerät (20) und eine Basisstation (10) umfasst, wobei das Endgerät (20) umfasst:

einen Empfangsabschnitt (203), der angepasst ist, um mindestens eine Konfiguration durch Signalisierung auf

**EP 3 637 924 B1**

höherer Ebene zu empfangen, wobei die mindestens eine Konfiguration jeweils eine Information über eine Periodizität einer Übertragung auf einem gemeinsam genutzten physikalischen Aufwärtsverbindungskanal, PUSCH, und eine Information über eine Zeitbereichsressource und eine Frequenzbereichsressource der PUSCH-Übertragung einschließt, wobei die mindestens eine Konfiguration jeweils einem Band in einer Zelle entspricht; und
einen Steuerabschnitt (401), der angepasst ist, um bei einem Empfang mehrerer Konfigurationen in einer Zelle durch den Empfangsabschnitt eine entsprechende PUSCH-Übertragung in Übereinstimmung mit nur einer der mehreren Konfigurationen zu einer bestimmten Zeit durchzuführen,
die Basisstation (10) umfasst:

einen Übertragungsabschnitt (103), der angepasst ist, um die mindestens eine Konfiguration zu übertragen; und
einen Steuerabschnitt (301), der angepasst ist, um eine Steuerung eines Empfangs der entsprechenden PUSCH-Übertragung durchzuführen.

**Revendications**

1. Terminal (20) comprenant :

   une section (203) de réception adaptée pour recevoir au moins une configuration par signalisation de couche supérieure, l'au moins une configuration comportant chacune des informations sur une périodicité de transmission de canal partagé physique de liaison montante, PUSCH, et des informations sur une ressource de domaine temporel et une ressource de domaine fréquentiel de la transmission PUSCH, l'au moins une configuration correspondant chacune à une bande dans une cellule ; et
   une section (401) de commande adaptée pour, lorsque la section de réception reçoit de multiples configurations dans une cellule, réaliser une transmission PUSCH correspondante conformément à une seule des multiples configurations à un moment donné.

2. Terminal (20) selon la revendication 1, dans lequel les multiples configurations comportent chacune des informations d'au moins l'un parmi un paramètre relatif à un signal de référence de démodulation, schéma de modulation et codage, MCS, un paramètre relatif à une commande de puissance, s'il faut appliquer ou non un précodage par transformée de Fourier discrète, un nombre de processus de demande de répétition automatique hybride, HARQ, un nombre de répétitions K, et une version de redondance, RV.

3. Procédé de radiocommunication pour un terminal, comprenant :

   la réception d'au moins une configuration par signalisation de couche supérieure, l'au moins une configuration comportant chacune des informations sur une périodicité de transmission de canal partagé physique de liaison montante, PUSCH, et des informations sur une ressource de domaine temporel et une ressource de domaine fréquentiel de la transmission PUSCH, l'au moins une configuration correspondant chacune à une bande dans une cellule ; et
   lorsque le terminal reçoit de multiples configurations dans une cellule, la mise en oeuvre d'une transmission PUSCH correspondante conformément à une seule des multiples configurations à un moment donné.

4. Station (10) de base comprenant :

   une section (103) de transmission adaptée pour transmettre au moins une configuration par signalisation de couche supérieure, l'au moins une configuration comportant chacune des informations sur une périodicité de transmission de canal partagé physique de liaison montante, PUSCH, et des informations sur une ressource de domaine temporel et une ressource de domaine fréquentiel de la transmission PUSCH, l'au moins une configuration correspondant chacune à une bande dans une cellule ; et
   une section (301) de commande adaptée pour réaliser une commande d'une réception de transmission PUSCH correspondante, qui est transmise par un terminal conformément à une seule des multiples configurations à un moment donné.

5. Système (1) comprenant un terminal (20) et une station (10) de base, dans lequel le terminal (20) comprend :

une section (203) de réception adaptée pour recevoir au moins une configuration par signalisation de couche supérieure, l'au moins une configuration comportant chacune des informations sur une périodicité de transmission de canal partagé physique de liaison montante, PUSCH, et des informations sur une ressource de domaine temporel et une ressource de domaine fréquentiel de la transmission PUSCH, l'au moins une configuration correspondant chacune à une bande dans une cellule ; et

une section (401) de commande adaptée, lorsque la section de réception reçoit de multiples configurations dans une cellule, à réaliser une transmission PUSCH correspondante conformément à une seule des multiples configurations à un moment donné,

la station (10) de base comprend :

une section (103) de transmission adaptée pour transmettre l'au moins une configuration ; et
une section (301) de commande adaptée pour réaliser une commande d'une réception de la transmission PUSCH correspondante.

## FIG. 1A

DOWNLINK CONTROL CHANNEL (UL GRANT)

UL DATA

SLOT (#n)

SLOT (#n+1)

## FIG. 1B

UL DATA

SLOT (#n)

EP 3 637 924 B1

FREQUENCY

TIME

RESOURCE FOR UL GRANT-BASED
TRANSMISSION

RESOURCE FOR UL GRANT-FREE
TRANSMISSION

FIG. 2

EP 3 637 924 B1

FIG. 3

EP 3 637 924 B1

FIG. 4

40

CORE NETWORK

30

1

HIGHER STATION
APPARATUS

C1

11

12a

12c

C2

C2

BACKHAUL
LINK

C2

20

12b

FIG. 5

FIG. 6

FIG. 7

EP 3 637 924 B1

EP 3 637 924 B1

FIG. 8

FIG. 9

10, 20

```
          1001              1007                    1004
    ┌─────────────┐                         ┌─────────────────┐
    │             │                         │  COMMUNICATION  │
    │  PROCESSOR  │─────────●───────────────│    APPARATUS    │
    │             │         │               │                 │
    └─────────────┘         │               └─────────────────┘

          1002              │                     1005
    ┌─────────────┐         │               ┌─────────────────┐
    │             │         │               │      INPUT      │
    │   MEMORY    │─────────●───────────────│    APPARATUS    │
    │             │         │               │                 │
    └─────────────┘         │               └─────────────────┘

          1003              │                     1006
    ┌─────────────┐         │               ┌─────────────────┐
    │             │         │               │     OUTPUT      │
    │   STORAGE   │─────────●───────────────│    APPARATUS    │
    │             │                         │                 │
    └─────────────┘                         └─────────────────┘
```

FIG. 10

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall Description; Stage 2 (Release 8). *3GPP TS36.300 V8.12.0,* April 2010

- **HUAWEI et al.** Grant-free resource configuration. *3GPP DRAFT; R2-1705118*